# EUROPEAN PATENT APPLICATION

(11) **EP 4 800 828 A1**
(43) Date of publication of application: **02.09.2026**
(21) Application number: 26160714.7
(22) Date of filing: 25.02.2026
(51) Int. Cl.: H01M 50/403, H01M 50/417, H01M 50/434, H01M 50/443, H01M 50/446, H01M 50/451, H01M 50/489

(54) **APPARATUS FOR MANUFACTURING SEPARATOR FOR RECHARGEABLE BATTERY, METHOD OF MANUFACTURING SEPARATOR FOR RECHARGEABLE BATTERY, AND RECHARGEABLE BATTERY**

(30) Priority: 28.02.2025 KR 20250026703
(71) Applicant: SAMSUNG SDI CO., LTD., Yongin-si, Gyeonggi-do 17084 (KR)
(72) Inventor: LEE, Jung Seong, 16678 Suwon-si, Gyeonggi-do (KR); LEE, Bae Wook, 16678 Suwon-si, Gyeonggi-do (KR)
(74) Representative: Michalski Hüttermann & Partner mbB

(57) **Abstract**

An apparatus for manufacturing a separator for a rechargeable battery, a method of manufacturing a separator for a rechargeable battery, and a rechargeable battery are provided. The separator includes a porous substrate and a coating layer formed on at least one surface of the porous substrate. The apparatus includes a drying unit of a coating film for the coating layer, wherein the drying unit includes a drying oven providing a drying space for the coating film for the coating layer, and an injector located in the drying oven and having an injection plate having a plurality of discharge holes which inject hot air toward the coating film for the coating layer.

## Description

### CROSS-REFERENCE TO RELATED APPLICATION

The present application claims priority and the benefit of Korean Patent Application No. 10-2025-0026703, filed on February 28, 2025 in the Korean Intellectual Property Office.

### BACKGROUND

### 1. Field of the Disclosure

The present disclosure relates to an apparatus for manufacturing a separator for a rechargeable battery, a method of manufacturing a separator for a rechargeable battery, and a rechargeable battery.

### 2. Discussion of Related Art

With increasing presence of electronic devices such as, e.g., mobile phones, notebook computers, electric vehicles, and the like, that use batteries, the demand for secondary batteries having high energy density and high capacity is increasing. Therefore, improving the performance of rechargeable lithium batteries may be advantageous.

A rechargeable lithium battery includes a positive electrode and a negative electrode that contain an active material capable of the intercalation and deintercalation of lithium ions, and the battery produces electric energy by oxidation and reduction reactions when the lithium ions are intercalated into and deintercalated from the positive electrode and the negative electrode.

The rechargeable lithium battery may include a separator between the positive electrode and the negative electrode. The separator may be composed of only a porous substrate, but the performance of the separator can be further improved by forming a coating layer on at least one surface of the porous substrate. The coating layer may be formed by applying a composition for a coating layer on at least one surface of the porous substrate to form a coating film for a coating layer and drying the coating film for a coating layer.

### SUMMARY

The present disclosure is directed to an apparatus for manufacturing a separator for a rechargeable battery, and a method of manufacturing a separator for a rechargeable battery capable of manufacturing a separator for a rechargeable battery having a low thermal shrinkage rate and a low shutdown temperature.

The present disclosure is also directed to an apparatus for manufacturing a separator for a rechargeable battery and a method of manufacturing a separator for a rechargeable battery capable of manufacturing a separator for a rechargeable battery having a uniform, or substantially uniform, thermal shrinkage rate and shutdown temperature.

According to one example embodiment, an apparatus for manufacturing a separator for a rechargeable battery is provided.

In the apparatus for manufacturing a separator for a rechargeable battery, the separator for a rechargeable battery includes a porous substrate, and a coating layer formed on at least one surface of the porous substrate. The manufacturing apparatus includes a drying unit of a coating film for the coating layer of the separator for a rechargeable battery. The drying unit includes a drying oven providing a drying space for the coating film for the coating layer, and an injector located in the drying oven and having an injection plate having a plurality of discharge holes which inject hot air toward the coating film for the coating layer, the injection plate has an opening ratio in a range of about 10% to about 65% as shown in Equation 1 below, and in Equation 1 below, d is in a range of about 5 mm to about 20 mm, and p is in a range of about 10 mm to about 15 mm: $Opening ratio = \left(90.5\times {d}^{2}\right) / {p}^{2} ;$ in Equation 1,
d is an average diameter of the discharge holes, and
p is an average value of separation distances between the centers of the discharge holes among the plurality of discharge holes.

Another example embodiment includes a method of manufacturing a separator for a rechargeable battery.

The method of manufacturing a separator for a rechargeable battery includes manufacturing a laminate of a porous substrate and a coating film for a coating layer formed on at least one surface of the porous substrate, and transferring the laminate into a drying unit of a rechargeable battery manufacturing apparatus to dry the coating film for a coating layer, wherein the drying unit includes a drying oven providing a drying space for the coating film for a coating layer, and an injector located in the drying oven and having an injection plate having a plurality of discharge holes which inject hot air toward the coating film for a coating layer, the injection plate has an opening ratio in a range of about 10% to about 65% as shown in Equation 1 below, and in Equation 1 below, d is in a range of about 5 mm to about 20 mm, and p is in a range of about 10 mm to about 15 mm: $Opening ratio = \left(90.5\times {d}^{2}\right) / {p}^{2} ;$ in Equation 1,
d is an average diameter of the discharge holes, and
p is an average value of separation distances between the centers of the discharge holes among the plurality of discharge holes.

Still another example embodiment includes a rechargeable battery.

The rechargeable battery includes a positive electrode, a negative electrode, and a separator for a rechargeable battery located between the positive electrode and the negative electrode and manufactured by the manufacturing apparatus or the manufacturing method.

### BRIEF DESCRIPTION OF THE DRAWINGS

The above and other objects, features and advantages of the present disclosure may become more apparent to those of ordinary skill in the art by describing example embodiments thereof in detail with reference to the accompanying drawings, in which:
FIG. 1 illustrates a rechargeable battery manufacturing apparatus according to one example embodiment;
FIG. 2 illustrates a drying unit of the rechargeable battery manufacturing apparatus of FIG. 1;
FIG. 3 is an enlarged plan view of a portion of an injection plate in the drying unit of FIG. 2;
FIG. 4 is an enlarged plan view of a portion of an injection plate according to another example embodiment;
FIG. 5 is a plan view of an injection plate according to still another example embodiment; and
FIG. 6, FIG. 7, FIG. 8 and FIG. 9 illustrate a rechargeable battery according to one example embodiment.
FIG. 10 is a flowchart illustrating a method of manufacturing a separator for a rechargeable battery, according to an example embodiment.

### DETAILED DESCRIPTION

Hereinafter, example embodiments of the present disclosure are described in detail. However, example embodiments are provided as examples, the present disclosure is not limited thereto, and the present disclosure is only defined by the scope of the claims to be described below.

Unless otherwise specified herein, when a part such as a layer, film, region, plate, and the like, is described as being "on" another part, it includes not only the case where the part is "directly on" the other part but also the case where there is still another part therebetween.

Unless otherwise specified in this specification, anything indicated in the singular may also include the plural. Further, unless otherwise stated, "A or B" may mean "including A, including B, or including A and B."

In this specification, the term "combination thereof" may mean a mixture, laminate, composite, copolymer, alloy, blend, and reaction product of the components.

In this specification, the term "particle diameter D50" refers to a particle diameter, which means the diameter of particles with a cumulative volume of 50% by volume in the particle size distribution. The particle size distribution may be measured by methods well known to those skilled in the art. For example, the particle size distribution may be measured using a particle size analyzer, a transmission electron micrograph, or a scanning electron micrograph. In another method, a D50 value may be obtained by measuring the particle diameter using a measuring apparatus using dynamic light scattering, performing data analysis to count the number of particles for each particle size range, and then calculating the particle diameter therefrom. Alternatively, D50 may be measured using a laser diffraction method. More specifically, when measuring by laser diffraction, after the particles to be measured are dispersed in a dispersion medium, the particles may be introduced into a commercially available laser diffraction particle diameter measuring apparatus (e.g., Microtrac MT 3000) and irradiated with ultrasonic waves of about 28 kHz at an output of 60 W, and the D50 based on 50 vol% of the particle diameter distribution in the measurement apparatus may be calculated.

In this specification, "(meth)acrylic" means acrylic and/or methacrylic.

When describing a numerical range in this specification, 'X to Y' means 'X or more and Y or less (X ≤ and ≤ Y).

When the terms "about" or "substantially" are used in this specification in connection with a numerical value, it is intended that the associated numerical value include a tolerance of +10% around the stated numerical value. When ranges are specified, the range includes all values therebetween such as increments of 0.1%.

An apparatus for manufacturing a separator for a rechargeable battery (e.g., a rechargeable lithium battery) according to one example embodiment may manufacture a separator for a rechargeable battery having a low thermal shrinkage rate and a low shutdown temperature and having a uniform, or substantially uniform, thermal shrinkage rate and shutdown temperature throughout the entire separator. The manufacturing apparatus can provide the low thermal shrinkage rate, low shutdown temperature, uniform thermal shrinkage rate, and uniform, or substantially uniform, shutdown temperature described above by controlling the drying of a coating film for a coating layer during the manufacturing of the rechargeable battery separator.

The rechargeable battery separator includes a porous substrate and a coating layer formed on at least one surface of the porous substrate. The coating layer may be formed by applying a composition for a coating layer on at least one surface of the porous substrate to form a coating film for a coating layer, and drying the coating film for a coating layer through a drying unit described below.

The apparatus for manufacturing a separator for a rechargeable battery includes a drying unit for a coating film for a coating layer of the rechargeable battery separator.

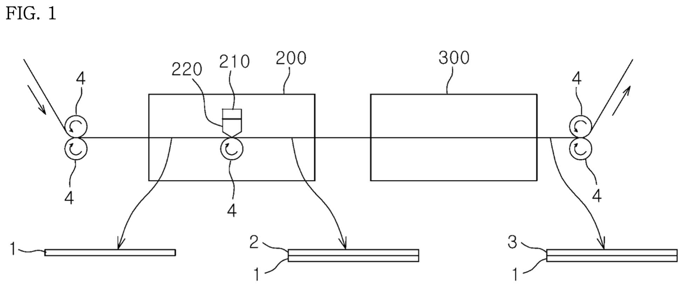

Referring to FIG. 1 to FIG. 3, the apparatus for manufacturing a separator for a rechargeable battery is described.

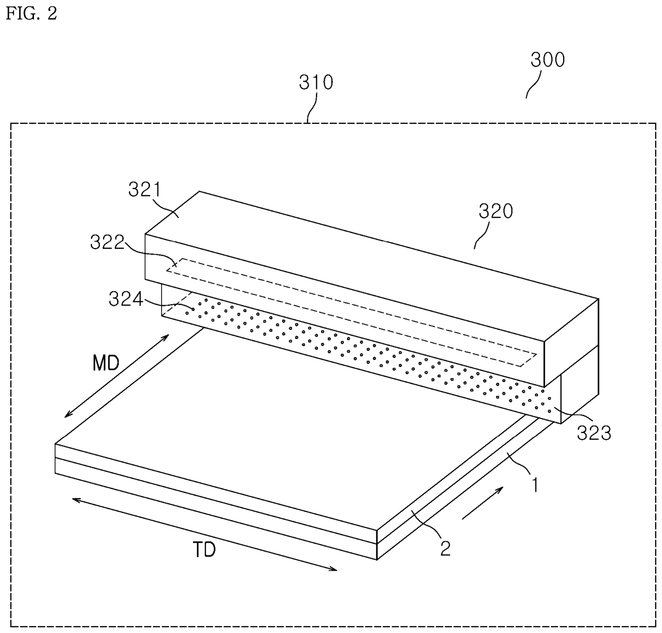

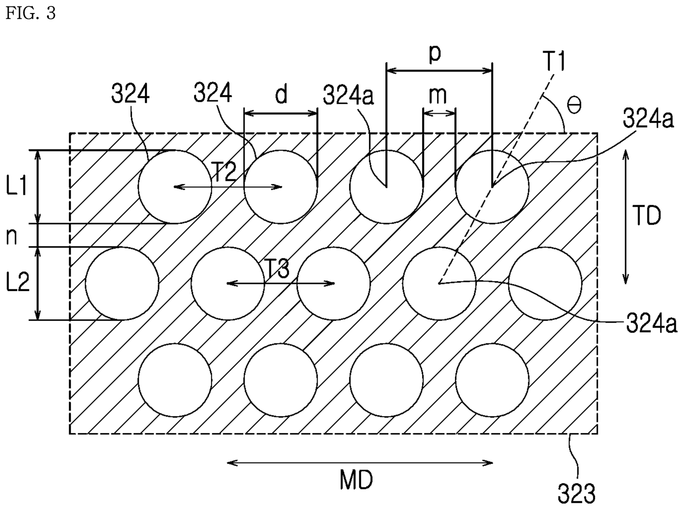

FIG. 1 illustrates a rechargeable battery manufacturing apparatus according to one example embodiment. FIG. 2 illustrates a drying unit of the rechargeable battery manufacturing apparatus of FIG. 1. FIG. 3 is an enlarged plan view of a portion of an injection plate in the drying unit of FIG. 2.

The apparatus for manufacturing a separator for a rechargeable battery includes a coating unit 200 and a drying unit 300.

The coating unit 200 applies a composition for a coating layer on at least one surface of a porous substrate 1. The coating unit 200 forms a laminate of the porous substrate 1 and a coating film 2 for a coating layer formed on one surface of the porous substrate 1.

The coating unit 200 may include a coating die 210 that applies a composition 220 for a coating layer on one surface of the porous substrate 1. The coating unit 200 may further include a coating layer composition feeder (not shown) that supplies the composition 220 for a coating layer to the coating die 210. The coating unit 200 may further include a transfer roll (4) for transferring the porous substrate 1.

The coating die 210, the coating layer composition feeder, and the transfer roll are each commonly applied in a typical rechargeable battery separator manufacturing apparatus known to those skilled in the art, so a detailed description thereof is omitted.

The drying unit 300 may dry the laminate of the porous substrate 1 and the coating film 2 for a coating layer transferred from the coating unit 200 to form a separator having the porous substrate 1 and a coating layer 3 formed on one surface of the porous substrate 1. In one example embodiment, the drying unit 300 may dry the coating film 2 for a coating layer.

The drying unit 300 may include a drying oven 310, and an injector 320 located in the drying oven 310.

The drying unit 300 may dry the coating film 2 for a coating layer while transferring the porous substrate 1 and the coating film 2 for a coating layer in a machine direction (MD) of the porous substrate 1.

The drying oven 310 can provide a drying space for the coating film 2 for a coating layer. The shape and size of the drying oven may be adjusted depending on the size of the injection plate, and the like. Although not shown in FIG. 2, the drying oven 310 may further include a controller capable of maintaining a constant temperature and humidity.

The injector 320 may dry the coating film 2 for a coating layer in the laminates transferred into the drying oven 310 to form a coating layer.

The injector 320 may include an injector body 321, a blower fan 322, and an injection plate 323.

The injector body 321 may support the blower fan 322 and the injection plate 323. FIG. 2 illustrates a case where one injector 320 is included in the drying oven 310, but the drying oven 310 may include a plurality of injectors 320 along the transfer direction of the porous substrate 1 and the coating film 2 for a coating layer.

The blower fan 322 may be located in the injector body 321 and above the injection plate 323. The blower fan 322 may create hot air through rotation and transfer the hot air to the injection plate.

The injection plate 323 may be formed with a plurality of discharge holes 324 that inject hot air toward the coating film 2 for a coating layer.

The discharge hole 324 is a hole passing through the injection plate 323. The discharge hole 324 may transfer hot air generated from the blower fan 322 located above the injection plate 323 to the coating film 2 for a coating layer. The discharge hole 324 may be formed by punching the injection plate 323, but is not limited thereto. The injection plate 323 may be formed of or include a metal having desired or improved heat resistance, but is not limited thereto.

The injection plate 323 has an opening ratio in a range of about 10% to about 65% as shown in Equation 1 below, and in Equation 1 below, d is in a range of about 5 mm to about 20 mm, and p is in a range of about 10 mm to about 15 mm. $Opening ratio = \left(90.5\times {d}^{2}\right) / {p}^{2} .$

In Equation 1:
d is an average diameter of the discharge holes, and
p is an average value of separation distances between the centers of the discharge holes among the plurality of discharge holes.

The drying unit of the manufacturing apparatus has an injection plate having a plurality of discharge holes formed therein, and by controlling the average diameter of the plurality of discharge holes, the separation distances between the centers of the discharge holes, and the opening ratio of Equation 1, a separator for a rechargeable battery having a low thermal shrinkage rate, a low shutdown temperature, and a uniform thermal shrinkage rate and shutdown temperature may be manufactured.

In Equation 1, the average diameter d of the discharge hole may be an average value of the sum of the diameters of the discharge holes formed in the injection plate.

Here, the 'diameter of the discharge hole' may mean a normal diameter when the discharge hole is circular. When the discharge hole is not circular, the diameter of the discharge hole may mean the longest length within the discharge hole.

In Equation 1, the separation distance between the centers of the discharge holes may be an average value of separation distances obtained by determining an arbitrary discharge hole formed in the injection plate and a discharge hole formed directly adjacent to the arbitrary discharge hole and measuring the separation distance between the centers 324a of the two discharge holes illustrated in FIG. 3.

Here, the center of the discharge hole may mean the center of a normal circle when the discharge hole is circular. When the discharge hole is not circular, the center of the discharge hole is defined as the point where lines drawn from an arbitrary point on the surface forming the discharge hole to an opposing arbitrary point intersect.

The injection plate having the opening ratio in a range of about 10% to about 65% in Equation 1 can provide a separator which provides a low thermal shrinkage, a low shutdown temperature, a uniform thermal shrinkage, and a uniform shutdown temperature when the coating film for a coating layer is dried using an injection plate in which discharge holes having the d value and p value in Equation 1 are formed.

When the opening ratio in Equation 1 is less than about 10%, the coating film for a coating layer may not be properly or sufficiently dried by hot air, so the coating layer may not be properly or sufficiently formed, and drying may occur only in some areas of the coating film for a coating layer, so that the thermal shrinkage rate and shutdown temperature may not be uniform.

When the opening ratio in Equation 1 exceeds about 65%, the coating film for a coating layer and the porous substrate may be excessively or substantially dried, resulting in a rather high thermal shrinkage rate.

The opening ratio in Equation 1 may be 10,11,12,13,14,15,16,17,18,19,20,21,22,23,24,25,26,27,28,29,30,31,32,33,34,35,36,37,38,39,40, 41,42,43,44,45,46,47,48,49,50,51,52,53,54,55,56,57,58,59,60,61,62,63,64,65%.

In Equation 1, d may be 5, 6, 7, 8, 9, 10, 11, 12, 13, 14, 15, 16, 17, 18, 19 or 20 mm, and p may be 10, 11, 12, 13, 14 or 15 mm.

For example, in Equation 1, d may be in a range of about 5 mm to about 10 mm, and p may be in a range of about 10 mm to about 15 mm. For example, in Equation 1, the opening ratio may be in a range of about 10% to about 45%, or about 10% to about 41%, for example, about 20% to about 25%. In the above range, it is possible to readily manufacture an injection plate having an opening ratio of Equation 1.

For example, in Equation 1, d may be in a range of about 5 mm to about 8 mm, p may be in a range of about 10 mm to about 15 mm, and the opening ratio may be in a range of about 10% to about 25%. In the above range, the thermal shrinkage rate can be reduced and air permeability can be improved.

For example, in Equation 1, d may be in a range of about 5 mm to about 8 mm, p may be in a range of about 10 mm to about 15 mm, and the opening ratio may be in a range of about 20% to about 25%. In the above range, the thermal shrinkage rate can be significantly reduced and air permeability can be improved.

The discharge hole 324 may be circular. However, the discharge hole is not limited to being circular and may be oval or amorphous. For example, the discharge hole 324 may be circular.

A minimum distance (m) between the discharge holes may be in a range of about 5 mm to about 15 mm, for example, 5 mm to 10 mm. In the above range, it is possible to readily manufacture a separator having a uniform thermal shrinkage rate and a uniform shutdown temperature.

Here, the 'minimum distance between discharge holes' may mean the minimum distance between two discharge holes obtained after determining an arbitrary discharge hole formed in the injection plate and a discharge hole formed directly adjacent to the arbitrary discharge hole.

In the injection plate, the discharge holes may be spaced apart from each other along the machine direction (MD) of the porous substrate.

In the present specification, a plurality of discharge holes are formed spaced apart from each other along the MD of the porous substrate and arranged in a single row, which is defined as a 'discharge hole row.'

In the injection plate, only one row of the discharge holes may be formed along a transverse direction (TD) of the porous substrate. However, when a plurality of rows of discharge holes in the injection plate are formed along the transverse direction of the porous substrate, the hot air may be more uniformly transferred to the coating film for a coating layer of the same area, which can be advantageous in providing a more uniform thermal shrinkage rate and shutdown temperature.

FIG. 3 illustrates an injection plate in which three rows of discharge holes are formed along the transverse direction of the porous substrate. However, the present disclosure is not limited thereto, and four or more rows of discharge holes may also be formed.

The injection plate 323 may have a first discharge hole row L1 and a second discharge hole row L2 sequentially formed along the transverse direction (TD) of the porous substrate.

The first discharge hole row L1 may include a plurality of discharge holes 324 formed spaced apart from each other along the machine direction (MD) of the porous substrate. The second discharge hole row L2 may include a plurality of discharge holes 324 formed spaced apart from each other along the machine direction (MD) of the porous substrate.

The center 324a of the discharge hole in the second discharge hole row L2 may be located between the centers 324a of the discharge holes in the first discharge hole row L1. In this case, the hot air from the injection plate can be more uniformly transferred to the coating film for a coating layer, thereby further increasing the uniformity of the thermal shrinkage rate and shutdown temperature. The center of the discharge hole is the same as described above.

According to one example embodiment, a line T1 connecting the center 324a of the discharge hole in the first discharge hole row and the center 324a of the discharge hole in the second discharge hole row may form an angle (θ) in a range of about 55° to about 65° with respect to the machine direction (MD) of the porous substrate. The angle represents the position between the discharge holes in the first discharge hole row and the discharge holes in the second discharge hole row. In the above angle range, a separator having a low thermal shrinkage rate and shutdown temperature may be manufactured with high efficiency from an injection plate of the same area. For example, the angle may be about 60°.

A line T2 connecting the centers of the discharge holes in the first discharge hole row and a line T3 connecting the centers of the second discharge holes in the second discharge hole row may be parallel to each other. In this case, since the discharge holes are uniformly formed not only in the machine direction of the porous substrate but also in the transverse direction of the porous substrate, it is possible to manufacture a separator with a uniform thermal shrinkage rate and shutdown temperature.

According to one example embodiment, separation distances between the discharge holes 324 in the first discharge hole row L1 may be the same. According to one example embodiment, separation distances between the discharge holes 324 in the second discharge hole row L2 may be the same. According to one example embodiment, the separation distances between the discharge holes in the first discharge hole row may be the same as the separation distances between the discharge holes in the second discharge hole row.

A separation distance (m) between the first discharge hole row and the second discharge hole row may be smaller than an average diameter d of the discharge hole in Equation 1. In this case, the separation distance between the first discharge hole row and the second discharge hole row is not too large, so that the opening ratio in a range of about 10% to about 65% of Equation 1 can be readily achieved. For example, the separation distance between the first discharge hole row and the second discharge hole row may be in a range of about 10 mm to about 20 mm, for example, 10 mm to 15 mm.

Here, the 'separation distance between the first discharge hole row and the second discharge hole row' may mean the minimum distance in the transverse direction of the porous substrate between the discharge holes included in the first discharge hole row and the discharge holes included in the second discharge hole row.

Although not shown in FIG. 2 and FIG. 3, the manufacturing apparatus may further include a transfer roll located in the drying oven and transferring the porous substrate and the coating film for a coating layer within the drying oven, and the transfer roll may be arranged in a plurality along a machine direction of the porous substrate.

The transfer roll may continuously dry the coating film for a coating layer while transferring the porous substrate and the coating film for a coating layer within the drying oven.

Hereinafter, the apparatus for manufacturing a separator for a rechargeable battery according to another example embodiment is described.

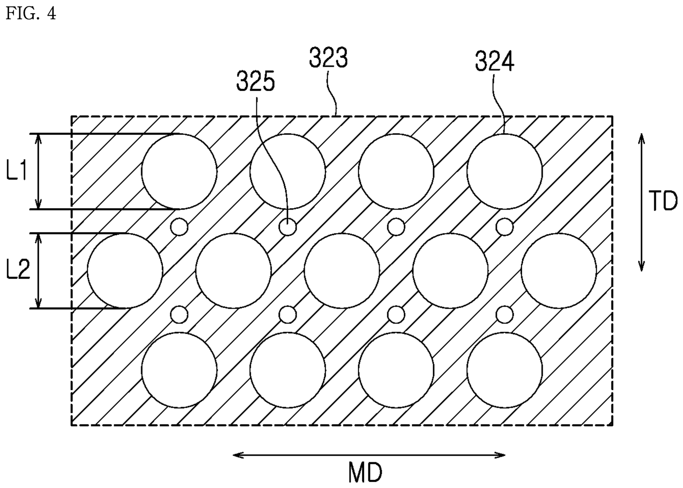

The apparatus for manufacturing a separator for a rechargeable battery is substantially the same as the apparatus for manufacturing a separator for a rechargeable battery of FIG. 1 to FIG. 3, except that the apparatus has the injection plate described in FIG. 4.

FIG. 4 is an enlarged plan view of a portion of an injection plate according to another example embodiment.

Referring to FIG. 4, the injection plate 323 has an additional discharge hole 325 having a smaller diameter and formed between the first discharge hole row L1 and the second discharge hole row L2. When assuming the same opening ratio of the injection plate, the discharge hole 325 may be configured to facilitate adjustment of the diameter of the discharge hole in at least one of the first discharge hole row L1 and the second discharge hole row L2.

Hereinafter, the apparatus for manufacturing a separator for a rechargeable battery according to still another example embodiment is described.

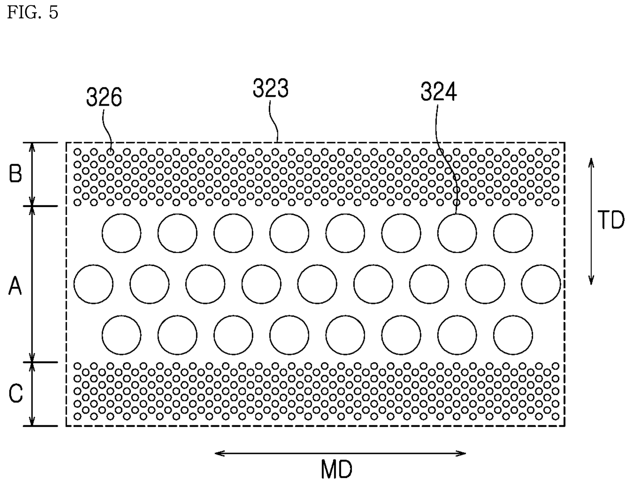

The apparatus for manufacturing a separator for a rechargeable battery is substantially the same as the apparatus for manufacturing a separator for a rechargeable battery of FIG. 1 to FIG. 3, except that the apparatus has the injection plate described in FIG. 5.

FIG. 5 is a plan view of an injection plate according to still another example embodiment.

Referring to FIG. 5, the injection plate 323 has regions with different opening ratios of Equation 1 along the transverse direction (TD) of the porous substrate. The injection plate 323 includes a central area (A) of the injection plate 323 in which the discharge holes 324 are provided, and peripheral areas (B and C) adjacent to the central area (A) in which the discharge holes 326 are provided. The opening ratio of Equation 1 in the central area (A) may be higher than the opening ratio of Equation 1 in the peripheral areas (B and C). In such cases, the effect of uniform air permeability distribution may be greater.

### Method of manufacturing separator for rechargeable battery

Hereinafter, a method of manufacturing a separator for a rechargeable battery according to one example embodiment is described.

The method of manufacturing a separator for a rechargeable battery includes manufacturing a laminate of a porous substrate and a coating film for a coating layer formed on at least one surface of the porous substrate and transferring the laminate into a drying unit of an apparatus for manufacturing a separator for a rechargeable battery to dry the coating film for a coating layer. The drying unit includes a drying oven providing a drying space for the coating film for a coating layer, and an injection plate located in the drying oven and having a plurality of discharge holes which inject hot air toward the coating film for a coating layer, and the injection plate has an opening ratio in a range of about 10% to about 65% as shown in Equation 1 above , and in Equation 1 above , d is in a range of about 5 mm to about 20 mm, and p is in a range of about 10 mm to about 15 mm.

In the example manufacturing method, a separator for a rechargeable battery having a low thermal shrinkage rate and a low shutdown temperature and having a uniform thermal shrinkage rate and shutdown temperature may be manufactured by drying the coating film for a coating layer with the drying unit.

In one example embodiment, the manufacturing method may use the above-described rechargeable battery separator manufacturing apparatus.

In the manufacturing method, the apparatus for manufacturing a separator for a rechargeable battery including the drying unit are substantially the same as the apparatus for manufacturing a separator for a rechargeable battery and the drying unit described above. Therefore, only the remaining parts are explained below.

The porous substrate may be or include a substrate that has a large number of pores and is typically used in electrochemical apparatuses. The porous substrate may be or include, but is not limited to, a polymer film formed of or including one polymer such as or including at least one of polyolefins such as polyethylene and polypropylene, polyesters such as polyethylene terephthalate and polybutylene terephthalate, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalate, glass fiber, and polytetrafluoroethylene (e.g. Teflon), or a copolymer or mixture of two or more thereof.

The porous substrate may be or include, for example, a polyolefin-based substrate including a polyolefin, and the polyolefin-based substrate has a desired or improved shutdown function and thus may contribute to improving the safety of the battery. The polyolefin-based substrate may be or include, for example, at least one of a polyethylene single-layer film, a polypropylene single-layer film, a polyethylene/polypropylene two-layer film, a polypropylene/polyethylene/polypropylene three-layer film, and a polyethylene/polypropylene/polyethylene three-layer film. In addition, the polyolefin-based substrate may include a non-olefin resin in addition to an olefin resin, or may include a copolymer of olefin and non-olefin monomers.

The porous substrate may have a thickness in a range of about 1 µm to about 40 µm. For example, the porous substrate may have a thickness in a range of about 1 µm to about 10 µm.

The coating film for a coating layer may be or include a coating film of a composition containing a filler and a (meth)acrylic binder.

The filler may be or include, for example, at least one of an inorganic filler, an organic filler, an organic-inorganic composite filler, or a combination thereof. The inorganic filler may be or include a ceramic material capable of improving heat resistance. The inorganic filler may include, for example, at least one of a metal oxide, a metalloid oxide, a metal fluoride, a metal hydroxide, or a combination thereof. The inorganic filler may include, for example, at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto. The organic filler may include, but is not limited to, at least one of an acryl compound, an imide compound, an amide compound, or a combination thereof. The organic filler may have a core-shell structure, but is not limited thereto. For example, the filler may be boehmite. The filler may have a particle diameter D50 of about 0.4 µm or less, for example, 0.3 µm or less, for example, in a range of about 0.1 µm to about 0.3 µm. In the above range, there may be an effect of improving the heat resistance of the separator. The filler may be included in a binder:filler mass ratio in a range of about 1:10 to about 1:50, for example, 1:20 to 1:30. In the above range, the manufacture of the separator can be facilitated by using the separator manufacturing apparatus.

The (meth)acrylic binder may include a structural unit containing a sulfonate group. The (meth)acrylic binder may further include one or more of a structural unit derived from (meth)acrylate or (meth)acrylic acid, a structural unit containing a cyano group, and a structural unit derived from (meth)acryl amide.

The sulfonate group-containing structural unit may be included in the (meth)acrylic binder in an amount in a range of about 0.1 mol% to about 65 mol%, for example, 0.1 mol% to 20 mol%, 0.1 mol% to 10 mol%, 1 mol% to 20 mol%, such as 1 mol% to 10 mol%, for example, 20 mol% to 65 mol%, or 30 mol% to 65 mol%. When the sulfonate group-containing structural unit is included within the above range, the separator can exhibit desired or improved adhesion, heat resistance, and air permeability.

The structural unit derived from (meth)acrylate or (meth)acrylic acid may be included in the (meth)acrylic binder in an amount in a range of about 0 mol% to about 70 mol%, for example, 10 mol% to 70 mol%, 10 mol% to 60 mol%, 20 mol% to 60 mol%, 10 mol% to 50 mol%, 30 mol% to 60 mol%, 10 mol% to 40 mol%, or 40 mol% to 55 mol%. In the above range, the separator can exhibit desired or improved adhesion, heat resistance, air permeability, and oxidation resistance.

The cyano group-containing structural unit may be included in the (meth)acrylic binder in an amount in a range of about 0 mol% to about 85 mol%, for example, 30 mol% to 85 mol%, 30 mol% to 70 mol%, 30 mol% to 60 mol%, 35 mol% to 60 mol%, or 35 mol% to 55 mol%. In the above range, the separator can secure desired or improved oxidation resistance and exhibit adhesion, heat resistance, and air permeability.

The structural unit derived from (meth)acryl amide may be included in the (meth)acrylic binder in an amount in a range of about 0 mol% to about 95 mol%, for example, 40 mol% to 85 mol%, 50 mol% to 85 mol%, 55 mol% to 95 mol%, 60 mol% to 85 mol%, 75 mol% to 95 mol%, or 80 mol% to 95 mol%. In the above range, the separator can secure desired or improved oxidation resistance and exhibit adhesion, heat resistance, and air permeability.

According to one example embodiment, the (meth)acrylic binder may have a sulfonate group-containing structural unit, a structural unit derived from (meth)acrylate or (meth)acrylic acid, and a cyano group-containing structural unit. In one example embodiment, the sulfonate group-containing structural unit, the structural unit derived from (meth)acrylate or (meth)acrylic acid, and the cyano group-containing structural unit may be included in a total amount of about 95 mol% or more, for example, in a range of about 95 mol% to about 100 mol% or 100 mol%, based on 100 mol% of the (meth)acrylic binder.

According to another example embodiment, the (meth)acrylic binder may have a sulfonate group-containing structural unit and a structural unit derived from (meth)acryl amide. In one example embodiment, the sulfonate group-containing structural unit and the structural unit derived from (meth)acryl amide may be included in a total amount of about 95 mol% or more, for example, in a range of about 95 mol% to about 100 mol% or 100 mol%, based on 100 mol% of the (meth)acrylic binder.

According to still another example embodiment, the (meth)acrylic binder may have a sulfonate group-containing structural unit, a structural unit derived from (meth)acrylate or (meth)acrylic acid, and a structural unit derived from (meth)acryl amide. In one example embodiment, the sulfonate group-containing structural unit, the structural unit derived from (meth)acrylate or (meth)acrylic acid, and the structural unit derived from (meth)acryl amide may be included in a total amount of about 95 mol% or more, for example, in a range of about 95 mol% to about 100 mol% or 100 mol%, based on 100 mol% of the (meth)acrylic binder.

The structural unit derived from (meth)acrylate or (meth)acrylic acid may be represented, for example, by at least one of the following Chemical Formula 1, Chemical Formula 2, Chemical Formula 3, or a combination thereof:

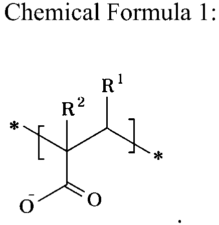

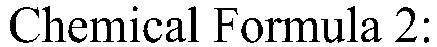

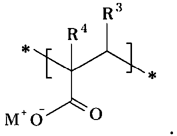

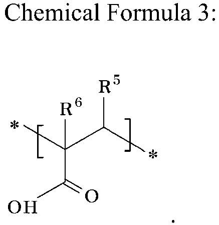

In Chemical Formulas 1 to 3, R¹ to R⁶ are each independently hydrogen or a methyl group, and in Chemical Formula 2, M is or includes an alkali metal. The alkali metal may be or include, for example, at least one of lithium, sodium, potassium, rubidium, or cesium.

The cyano group-containing structural unit may be represented, for example, by the following Chemical Formula 4.

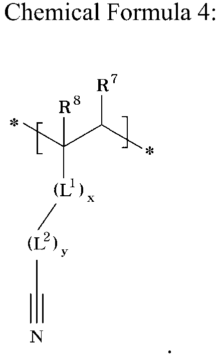

In Chemical Formula 4, R⁷ and R⁸ are each independently hydrogen or a C1 to C3 alkyl group, L¹ is or includes -C(=O)-, -C(=O)O-, -OC(=O)-, -O- or -C(=O)NH-, x is an integer from 0 to 2, L² is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclene group, and y is an integer from 0 to 2.

The sulfonate group-containing structural unit may contain a conjugate base of sulfonic acid, a sulfonate, or a derivative thereof. For example, the sulfonate group-containing structural unit may be represented by at least one of the following Chemical Formula 5, Chemical Formula 6, Chemical Formula 7, or a combination thereof.

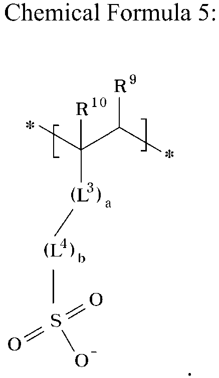

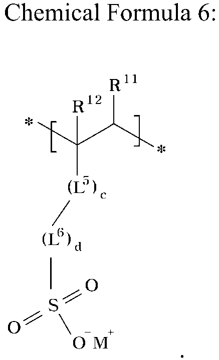

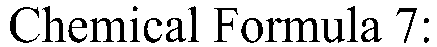

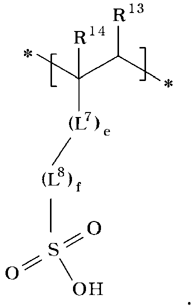

In Chemical Formulas 5 to 7, R⁹ to R¹⁴ are each independently hydrogen or a C1 to C3 alkyl group, L³, L⁵, and L⁷ each independently is or includes -C(=O)-, -C(=O)O-, -OC(=O)-, -O- or -C(=O)NH-, L⁴, L⁶, and L⁸ each independently is or includes a substituted or unsubstituted C1 to C10 alkylene group, a substituted or unsubstituted C3 to C20 cycloalkylene group, a substituted or unsubstituted C6 to C20 arylene group or a substituted or unsubstituted C3 to C20 heterocyclene group, a, b, c, d, e, and f are each independently an integer ranging from 0 to 2, and in Chemical Formula 6, M is or includes an alkali metal.

The structural unit derived from the (meth)acryl amide may be represented by the following Chemical Formula 8.

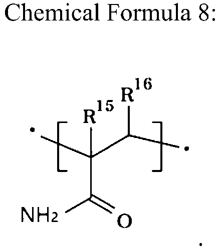

In Chemical Formula 8, R¹⁵ and R¹⁶ are each independently hydrogen or a methyl group.

The (meth)acrylic binder may have various forms, such as an alternating polymer in which the structural units are alternately distributed, a random polymer in which the structural units are randomly distributed, or a graft polymer in which some structural units are grafted. A weight average molecular weight (Mw) of the (meth)acrylic binder may be in a range of about 200,000 g/mol to about 700,000 g/mol, for example, 200,000 g/mol to 600,000 g/mol, 300,000 g/mol to 600,000 g/mol. In the above range, the separator can exhibit desired or improved adhesion, heat resistance, air permeability, and oxidation resistance. The weight average molecular weight may be a polystyrene-converted average molecular weight measured using, e.g., gel permeation chromatography. A glass transition temperature of the (meth)acrylic binder may be in a range of about 200 °C to about 280 °C, for example, 210 °C to 270 °C, 210 °C to 260 °C. In the above range, the separator can exhibit desired or improved adhesion, heat resistance, air permeability, and oxidation resistance. The glass transition temperature may be a value measured by differential scanning calorimetry. The (meth)acrylic binder may have a melting point (Tm) of about 160 °C or higher.

The coating film for a coating layer may be formed by applying the composition for a coating layer to at least one surface of the porous substrate at a predetermined thickness.

A thickness of the coating film for a coating layer may be in a range of about 0.1 µm to about 10 µm, for example, 0.1 to 5 µm or 0.5 to 5 µm. In the above range, the manufacture of the separator can be facilitated by using the manufacturing apparatus.

### Separator for rechargeable battery

A separator for a rechargeable battery according to one example embodiment may be manufactured using the apparatus for manufacturing a rechargeable battery separator.

The rechargeable battery separator can exhibit desired or improved air permeability. For example, the separator may have an air permeability of less than about 125 sec/100 cc, for example, 122 sec/100 cc or less.

The rechargeable battery separator may have a thermal shrinkage rate of about 3.0% or less, for example, 2.8% or less, in each of the machine direction and the transverse direction. In the above range, the reliability of the battery may be improved.

The rechargeable battery separator may have a shutdown temperature of less than about 145 °C, for example, 143 °C or less. In the above range, the reliability of the battery may be improved by quickly shutting down the battery when the thermal runaway of the battery occurs.

### Rechargeable lithium battery

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be positioned between the positive electrode and the negative electrode.

### Positive electrode

A positive electrode for a rechargeable lithium battery may include a current collector, and a positive electrode active material layer on the current collector. The positive electrode active material layer may include a positive electrode active material, and may further include a binder and/or a conductive material. For example, the positive electrode may further include an additive that can constitute a sacrificial positive electrode.

### Positive electrode active material

The positive electrode active material may include a compound (lithiated intercalation compound) that is capable of intercalating and deintercalating lithium. Specifically, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free lithium nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn₈X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of about 90 wt% to about 99.5 wt% based on 100 wt% of the positive electrode active material layer. Amounts of the binder and the conductive material may be in a range of about 0.5 wt% to about 5 wt%, respectively, based on 100 wt% of the positive electrode active material layer.

The binder attaches the positive electrode active material particles to each other, and also attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector, but the current collector is not limited thereto.

### Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include a range of about 90 wt% to about 99 wt% of the negative electrode active material, a range of about 0.5 wt% to about 5 wt% of the binder, and a range of about 0 wt% to about 5 wt% of the conductive material.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may attach the negative electrode active material to the current collector. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

### Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, tert-butyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluoro(oxalato) borate (LiDFOB), lithium difluorobis(oxalato)phosphate (LiDFBOP), and lithium bis(oxalato) borate (LiBOB).

The rechargeable lithium battery may be classified into cylindrical, prismatic, pouch, or coin-type batteries, and the like depending on their shape.

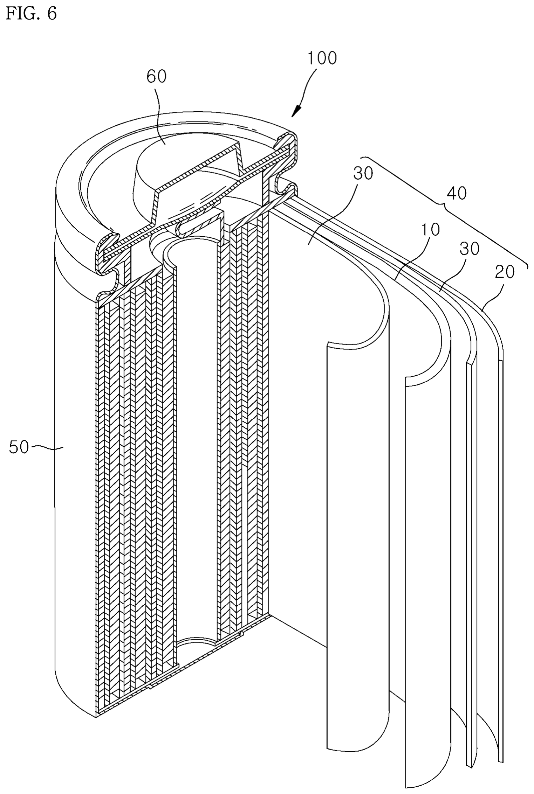

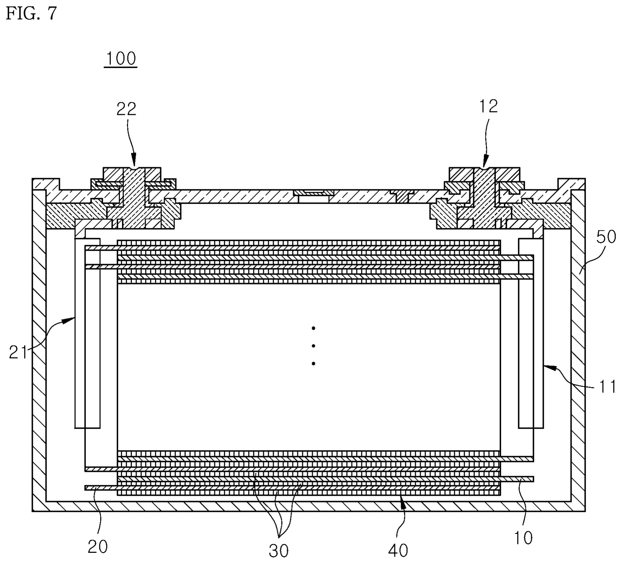

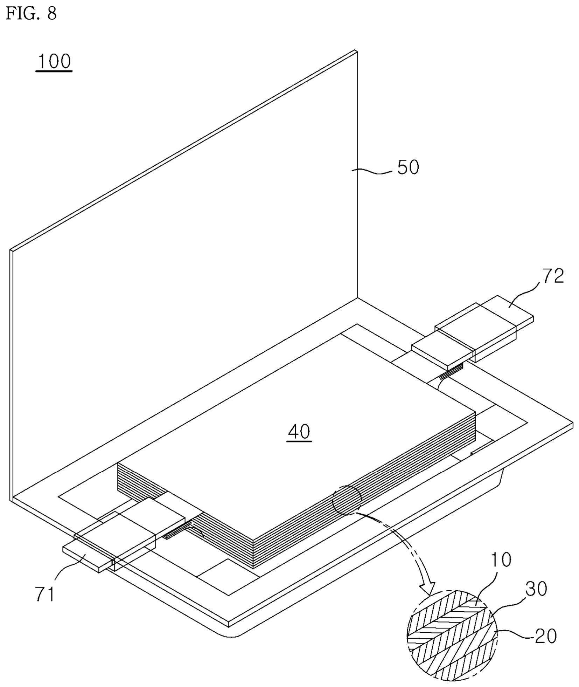

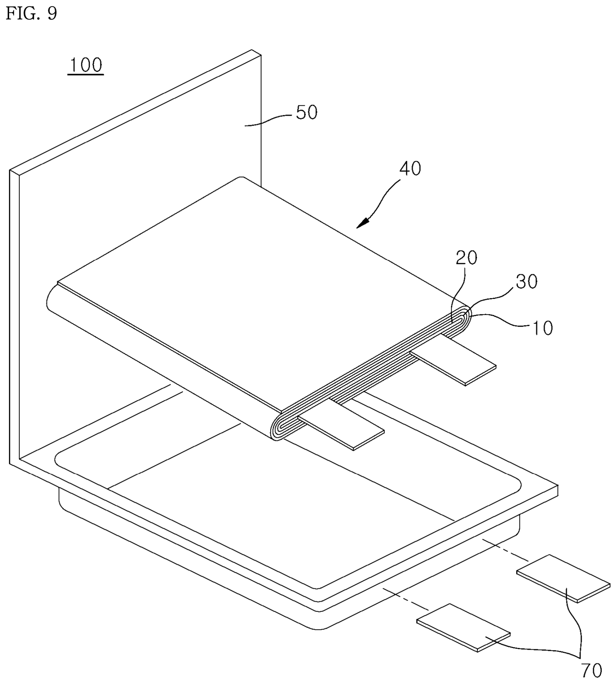

FIG. 6 to FIG. 9 are schematic views illustrating a rechargeable lithium battery according to an example embodiment. FIG. 6 shows a cylindrical battery, FIG. 7 shows a prismatic battery, and FIG. 8 and FIG. 9 show pouch-type batteries. Referring to FIG. 6 to FIG. 9, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 6. In FIG. 7, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 8 and FIG. 9, the rechargeable lithium battery 100 may include an electrode tab 70 illustrated in FIG. 9, or, for example, a positive electrode tab 71 and a negative electrode tab 72 illustrated in FIG. 8, the electrode tabs 70/71/72 forming an electric path for inducing the current formed in the electrode assembly 40 to the outside of the battery 100.

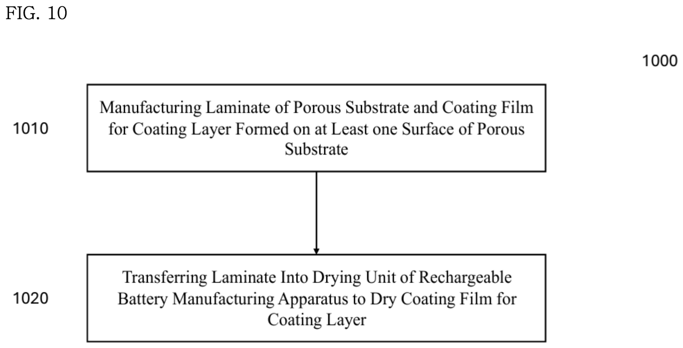

FIG. 10 is a flowchart illustrating a method of manufacturing a separator for a rechargeable battery, according to an example embodiment. In FIG. 10, the method 1000 includes operation 1010, which includes manufacturing a laminate of a porous substrate and a coating film for a coating layer formed on at least one surface of the porous substrate. Operation 1020 includes transferring the laminate into a drying unit of a rechargeable battery manufacturing apparatus to dry the coating film for a coating layer. In an example, the drying unit includes a drying oven providing a drying space for the coating film for a coating layer, and an injection plate located in the drying oven and having a plurality of discharge holes which inject hot air toward the coating film for a coating layer. In another example, the injection plate has an opening ratio in a range of about 10% to about 45% as shown in Equation 1. For example, d is in a range of about 5 mm to about 20 mm, and p is in a range of about 10 mm to about 15 mm. $Opening ratio = \left(90.5\times {d}^{2}\right) / {p}^{2} .$

In Equation 1, d is an average diameter of the discharge holes, and p is a separation distance between the centers of the discharge holes among the plurality of discharge holes.

In another example, the porous substrate has a thickness in a range of about 1 µm to about 10 µm, and the coating film for a coating layer has a thickness in a range of about 0.5 µm to about 5 µm. In a further example, the coating film for a coating layer is a coating film of a composition for the coating layer having a (meth)acrylic binder and a filler in a mass ratio in a range of about 1:10 to about 1:50. In yet another example, the (meth)acrylic binder includes a sulfonate group-containing structural unit, and one or more of a structural unit derived from (meth)acrylate or (meth)acrylic acid, a cyano group-containing structural unit, and a structural unit derived from (meth)acryl amide.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are only examples of the present disclosure, and the present disclosure is not limited to the following examples.

### Preparation Example

In a 10 L four-necked flask equipped with a stirrer, a thermometer, and a condenser, distilled water (6361 g), acrylic acid (1.0 mol), acrylamide (8.5 mol), potassium persulfate (0.01 mol), 2-acrylamido-2-methylpropanesulfonic acid (0.5 mol), and a 5 N lithium hydroxide aqueous solution (1.05 equivalents based on the total amount of 2-acrylamido-2-methylpropanesulfonic acid) were added, and the internal pressure was reduced to 10 mmHg using a diaphragm pump, and the internal pressure was restored to normal pressure with nitrogen, and this operation was repeated three times. The reaction was performed for 12 hours while performing control so that the temperature of a reaction solution was stabilized between 65 °C and 70 °C. After cooling to room temperature, the pH of the reaction solution was adjusted to a range of about 7 to about 8 using a 25% ammonia aqueous solution. In this manner, poly(acrylic acid-co-acrylic acid lithium salt-co-acrylamide-co-2-acrylamido-2-methylpropanesulfonic acid lithium salt) was prepared. The molar ratio of acrylic acid + acrylic acid lithium salt, acrylamide, and 2-acrylamido-2-methylpropanesulfonic acid lithium salt was 10:85:5. About 10 mL of a reaction solution (reaction product) was taken and a non-volatile component content was measured, which was about 9.5% (theoretical value: 10%).

### Example 1

The acrylic binder (10 wt% in distilled water) prepared in Preparation Example and boehmite (particle size D50: 200 nm, plate-shaped) as a filler were mixed, put into water as a solvent, and then milled and dispersed at 25 °C for 30 minutes using a bead mill to prepare a composition for a coating layer. The composition for a coating layer has an acrylic binder and filler weight ratio of 1:20.

The composition for a coating layer was applied on one surface of a polyethylene film (thickness: 5.5 µm, SK Corporation, air permeability: 120 sec/100 cc, puncture strength: 480 kgf) as a porous substrate to a thickness of 1.8 µm to form a coating film for a coating layer on one surface of the porous substrate.

The laminate of the porous substrate and the coating film for a coating layer was put into a drying oven having an injection plate as shown in FIG. 3 and dried to manufacture a separator having a porous substrate and a coating layer formed on one surface of the porous substrate. The temperature inside the drying oven was 70 °C, and the drying time inside the drying oven was maintained at 5 minutes. The detailed configuration of the injection plate in the drying oven is as shown in Table 1 below, and the discharge holes are circular and have the same diameter.

### Examples 2 and 3

Separators were manufactured in the same manner as in Example 1, except that the injection plate in the drying oven in Example 1 was changed as shown in Table 1 below.

### Example 4

A separator was manufactured in the same manner as in Example 1, except that the injection plate in the drying oven in Example 1 was changed as shown in Table 1 below.

### Comparative Example 1

A separator was manufactured in the same manner as in Example 1, except that an injection plate having a slotted discharge hole without a plurality of discharge holes was used in Example 1.

### Comparative Examples 2 and 3

Separators were manufactured in the same manner as in Example 1, except that the injection plate in the drying oven in Example 1 was changed as shown in Table 1 below.

The following physical properties were evaluated using the separators manufactured in the examples and comparative examples.

### Air permeability and standard deviation (units: sec/100 cc)

The air permeability was measured by measuring the time (units: seconds) taken for 100 cc of air to pass through the separator using a measuring device (EG01-55-1MR, Asahi Seiko).

The width of the separator, 200 mm, was divided into five equal parts to show the mean and standard deviation.

### Dry thermal shrinkage rate and standard deviation (units: %)

Each separator of the examples and comparative examples was cut into a size of 5 cm × 5 cm to prepare a sample. After leaving the above sample in a convection oven at 130 °C for 1 hour, the shrinkage rate in each of the machine direction (MD) and the transverse direction (TD) was calculated. The shrinkage rate was calculated according to Mathematical Formula 1 below. $Shrinkage rate = \left(L0-L1\right) / L 0 \times 100 .$

L0 is the initial length of the separator, and L1 is the length of the separator after being allowed to stand at 130 °C for 1 hour.

The width of the separator, 200 mm, was divided into five equal parts to show the mean and standard deviation.

### Shutdown temperature and standard deviation (units: °C)

Each separator for a rechargeable lithium battery of the examples and comparative examples was cut into a size of 5 cm × 5 cm to prepare a sample. 97 wt% of lithium cobalt nickel aluminum oxide as a positive electrode active material, 1.5 wt% of carbon nanotubes as a conductive material, and 1.5 wt% of polyvinylidene fluoride as a binder were mixed, and N-methyl-2-pyrrolidone was added to prepare a positive electrode slurry. The prepared positive electrode slurry was applied onto aluminum foil, dried, and roll-pressed to manufacture a positive electrode. 97.4 wt% of artificial graphite as a negative electrode active material, 1.0 wt% of carboxymethyl cellulose, 1.5 wt% of styrene-butadiene rubber as a binder, and 0.1 wt% of carbon nanotubes as a conductive material was mixed, and distilled water was added to prepare a negative electrode slurry. The prepared negative electrode slurry was applied onto copper foil, dried, and roll-pressed to manufacture a negative electrode. One sheet of the sample was placed between the positive electrode and the negative electrode to manufacture three sets of positive electrode-sample-negative electrode laminates, which were then placed in a pouch. 2 g of an electrolyte (1.5 M LiPF₆ dissolved in ethylene carbonate, ethyl methyl carbonate, and dimethyl carbonate (volume ratio of 30:50:20 based on the total volume of 100)) was injected to completely saturate the laminate with the electrolyte, sealed, and allowed to stand at 25 °C for 12 hours to manufacture a rechargeable lithium battery. The impedance of the battery was measured using an electrochemical impedance spectroscopy (EIS) apparatus while the rechargeable lithium battery was being operated and the temperature was increased at a rate of 10 °C/min. The temperature at which the impedance becomes 100 times the initial value is taken as the shutdown temperature.

The width of the separator, 200 mm, was divided into five equal parts to show the mean and standard deviation.

**Table 1:**

| | | Examples | | | | Comparative Examples | | |
|---|---|---|---|---|---|---|---|---|
| | | 1 | 2 | 3 | 4 | 1 | 2 | 3 |
| Discharge hole | Form | Porous | Porous | Porous | Porous | Slotted | Porous | Porous |
| | Diameter d (mm) | 5 | 5 | 10 | 10 | - | 5 | 5 |
| | Separation distance p (mm) | 15 | 10 | 15 | 12 | - | 17 | 7 |
| Opening ratio (%) | | 10.1 | 22.7 | 40.3 | 62.8 | - | 8 | 48 |
| Air permeability | | 122 | 119 | 121 | 120 | 125 | 131 | 127 |
| Standard deviation of air permeability | | 1.14 | 2.07 | 2.41 | 2.39 | 4.95 | 5.12 | 6.80 |
| Thermal shrinkage rate | | 2.6 | 2.3 | 2.8 | 3.1 | 3.2 | 3.9 | 3.7 |
| Standard deviation of thermal shrinkage rate | | 0.17 | 0.11 | 0.24 | 0.36 | 0.78 | 0.79 | 0.76 |
| Shutdown temperature | | 143 | 143 | 142 | 141 | 145 | 144 | 143.5 |
| Standard deviation of shutdown temperature | | 0.53 | 0.18 | 0.46 | 0.26 | 1.70 | 1.16 | 1.23 |
| * The width of the coated separator, 200 mm, was divided into five equal parts to show the mean and standard deviation. | | | | | | | | |

As shown in Table 1 above, the separator manufacturing apparatuses of the examples can increase the reliability of a rechargeable battery by manufacturing a separator for a rechargeable battery having a low thermal shrinkage rate and a low shutdown temperature and having a uniform thermal shrinkage rate and shutdown temperature.

An apparatus for manufacturing a separator for a rechargeable battery according to one example embodiment, and a method of manufacturing the separator, can increase the reliability of a rechargeable battery by manufacturing a rechargeable battery separator having a low thermal shrinkage rate and a low shutdown temperature and having a uniform thermal shrinkage rate and shutdown temperature.

Although the example embodiments of the present disclosure have been described above, the present disclosure is not limited thereto, and various modifications may be made within the scope of the claims, the detailed description of the disclosure, and the attached drawings, which also fall within the scope of the present disclosure.

## Claims

1. An apparatus for manufacturing a separator (30) for a rechargeable battery (100),
wherein the separator (30) for a rechargeable battery (100) includes a porous substrate (1) and a coating layer (3) formed on at least one surface of the porous substrate (1),
the apparatus includes a drying unit (300) of a coating film (2) for the coating layer (3) of the separator (30) for a rechargeable battery (100), wherein the drying unit (300) includes a drying oven (310) providing a drying space for the coating film (2) for the coating layer (3), and an injector (320) located in the drying oven (310) and having an injection plate (323) having a plurality of discharge holes (324, 325) which inject hot air toward the coating film (2) for the coating layer (3),
the injection plate (323) has an opening ratio of 10% to 65% as shown in Equation 1 below, wherein in Equation 1 below, d is 5 mm to 20 mm, and p is 10 mm to 15 mm: $Opening ratio = \left(90.5\times {d}^{2}\right) / {p}^{2}$
and wherein in Equation 1,
d is an average diameter of the discharge holes (324, 325),
p is a separation distance between centers (324a) of the discharge holes (324, 325) among the plurality of discharge holes (324, 325).

2. The apparatus of claim 1, wherein a minimum separation distance (m) between two adjacent discharge holes (324, 324) is 5 mm to 15 mm.

3. The apparatus of claims 1 or 2, wherein each of the discharge holes (324, 325) is circular, oval, or amorphous.

4. The apparatus according to any of the preceding claims, wherein the injection plate (323) has a discharge hole row (L1, L2) formed therein, and
the discharge hole row (L1, L2) is formed such that the plurality of discharge holes (324, 325) are spaced apart from each other along a machine direction (MD) of the porous substrate (1).

5. The apparatus of claim 4, wherein a plurality of discharge hole rows (L1, L2) are formed along a transverse direction (TD) of the porous substrate (1), the transvers direction (TD) being orthogonal to the machine direction (MD), wherein the injection plate (323) has discharge hole rows (L1, L2) including a first discharge hole row (L1) and a second discharge hole row (L2) sequentially formed along the transverse direction (TD) of the porous substrate (1), and
a center (324a) of the discharge hole (324, 325) in the second discharge hole row (L2) is located between the centers (324a) of the discharge holes (324, 325) in the first discharge hole row (L1).

6. The apparatus of claim 5, wherein a line (T1) connecting the center (324a) of the discharge hole (324, 325) in the first discharge hole row (L1) and the center (324a) of the discharge hole (324, 325) in the second discharge hole row (L2) forms an angle (θ) of 55° to 65° with respect to the machine direction (MD) of the porous substrate (1).

7. The apparatus of claims 5 or 6, wherein a line (T2) connecting the centers (324a) of the discharge holes (324, 325) in the first discharge hole row (L1) and a line (T3) connecting the centers (324a) of the discharge holes (324, 325) in the second discharge hole row (L2) are parallel to each other.

8. The apparatus according to any of claims 5 to 7, wherein separation distances (m) between the discharge holes (324, 325) in the first discharge hole row (L1) are the same, and separation distances between the discharge holes (324, 325) in the second discharge hole row (L2) are the same; and/or wherein a separation distance (n) between the first discharge hole row (L1) and the second discharge hole row (L2) is smaller than the average diameter d of the discharge holes (324, 325) in Equation 1.

9. The apparatus according to any of the preceding claims, further comprising a transfer roll, and preferably a plurality of transfer rolls, located in the drying oven (310) and transferring the porous substrate (1) and the coating film (2) for the coating layer (3) within the drying oven (310), and wherein preferably the plurality of transfer rolls are arranged along a machine direction (MD) of the porous substrate (1).

10. The apparatus according to any of the preceding claims, wherein in Equation 1, d is 5 mm to 8 mm, p is 10 mm to 15 mm, and the opening ratio is 20% to 25%.

11. A method of manufacturing a separator (30) for a rechargeable battery (100), the method preferably performed with an apparatus configured according to any of the previous claims, the method comprising:
manufacturing a laminate of a porous substrate (1) and a coating film (2) for a coating layer (3) formed on at least one surface of the porous substrate (1); and
transferring the laminate into a drying unit (300) of a rechargeable battery manufacturing apparatus to dry the coating film (2) for a coating layer (3),
wherein the drying unit (300) includes a drying oven (310) providing a drying space for the coating film (2) for a coating layer (3), and an injection plate (323) located in the drying oven (310) and having a plurality of discharge holes (324, 325) which inject hot air toward the coating film (2) for a coating layer (3),
the injection plate (323) has an opening ratio of 10% to 45% as shown in Equation 1 below,
wherein in Equation 1 below, d is 5 mm to 20 mm, and p is 10 mm to 15 mm: $Opening ratio = \left(90.5\times {d}^{2}\right) / {p}^{2}$
and wherein in Equation 1,
d is an average diameter of the discharge holes (324, 325),
p is a separation distance between the centers (324a) of the discharge holes (324, 325) among the plurality of discharge holes (324, 325).

12. The method of claim 11, wherein the porous substrate has a thickness of 1 µm to 10 µm, and the coating film (2) for a coating layer (3) has a thickness of 0.5 µm to 5 µm.

13. The method of any of claims 11 or 12, wherein the coating film (2) for a coating layer (3) is a coating film (2) of a composition (220) for the coating layer (3) having a (meth)acrylic binder and a filler in a mass ratio of 1:10 to 1:50.

14. The method of claim 13, wherein the (meth)acrylic binder includes a sulfonate group-containing structural unit; and one or more of a structural unit derived from (meth)acrylate or (meth)acrylic acid, a cyano group-containing structural unit, and a structural unit derived from (meth)acryl amide.

15. A rechargeable battery (100) comprising:
a positive electrode (10);
a negative electrode (20); and
a separator (30) located between the positive electrode (10) and the negative electrode (20) and wherein the separator (30) is manufactured by the manufacturing apparatus of any one of claims 1 to 10 and/or by the manufacturing method of any one of claims 11 to 14.
